Europäisches Patentamt

European Patent Office

Office européen des brevets

(19)

(11) Veröffentlichungsnummer: **0 126 403**
A1

# (12) EUROPÄISCHE PATENTANMELDUNG

(21) Anmeldenummer: 84105462.0

(22) Anmeldetag: 14.05.84

(51) Int. Cl.³: **B 29 C 5/00**

(30) Priorität: 18.05.83 DE 3318151

(43) Veröffentlichungstag der Anmeldung: 28.11.84
Patentblatt 84/48

(84) Benannte Vertragsstaaten: **AT CH DE FR GB IT LI LU NL SE**

(71) Anmelder: **Siemens Aktiengesellschaft, Berlin und München Wittelsbacherplatz 2, D-8000 München 2 (DE)**

(72) Erfinder: **Otto, Peter H., Dr., Weinbergerstrasse 55, D-8000 München 60 (DE)**
Erfinder: **Rauchmaul, Siegfried, Konrad-Celtis-Strasse 70, D-8000 München 70 (DE)**

(54) Verfahren zur Herstellung von dichten Bauteilen.

(57) Beim Umhüllen von Einlegeteilen, zum Beispiel aus Metall, mit Kunststoff, entstehen aufgrund unterschiedlicher Wärmeausdehnungskoeffizienten und Schwindung unerwünschte Spalte. Um hermetisch dichte Bauteile zu erzielen, wird nach der Erfindung auf die Einlegeteile eine dünne Schicht aus einem Haftvermittler aufgebracht, die die Spaltbildung zwischen Einlegeteil und Kunststoff verhindert.

EP 0 126 403 A1

0126403

SIEMENS AKTIENGESELLSCHAFT
Berlin und München

Unser Zeichen
VPA **83 P 1 3 4 2 E**

## Verfahren zur Herstellung von dichten Bauteilen.

Die Erfindung betrifft ein Verfahren zur Herstellung von Bauteilen aus Kunststoffen mit Einlegeteilen.

Als Einlegeteile sind zum Beispiel Kontakt- und Verbindungselemente (wie Gewindeeinsätze, Scharniere usw.) und Durchführungen zu verstehen, die teilweise von Kunststoff umschlossen werden. Nach dem Umhüllen der Einlegeteile schwindet der Kunststoff infolge seiner Volumenkontraktion beim Erkalten und gegebenenfalls aufgrund seiner Nachkristallisation. Dadurch ist am fertigen Bauteil zwischen Einlegeteil und Kunststoff keine dichte Verbindung mehr gegeben.

Um dichte Bauteile (Einlegeteil/Umhüllung) herzustellen, war es bisher immer erforderlich, nachträglich durch einen weiteren Verfahrensschritt die beim Herstellungsprozeß entstandenen Undichtigkeiten abzudichten. Das geschieht in der Regel durch Aufbringen einer Abdichtmasse. Hierbei sind aber beim Aushärten besondere Vorsichtsmaßnahmen, zum Beispiel bezüglich Temperatur, erforderlich, die in die wirtschaftliche Betrachtung eingehen.

Konstruktive Maßnahmen an den Einlegeteilen, wie zum Beispiel Einstiche, Hinterschnitte, Kordelungen oder ähnliches führten bisher allein nicht dazu, die Spalten zu vermeiden. Auch geometrische Änderungen am Kunststoffteil (zum Beispiel Wanddickenänderungen) können das Entstehen der beschriebenen Undichtigkeiten zwischen Einlegeteil und Umhüllung im allgemeinen nicht verhindern.

Wed 1 Plr/3.5.1983

Der Erfindung liegt die Aufgabe zugrunde, das eingangs genannte Verfahren zu realisieren und Bauteile herzustellen, die zwischen Einlegeteil und Kunststoffummantelung hermetisch dicht sind. Das ist besonders wesentlich, wenn in den Bauteilen elektronische Schaltungen angeordnet sind, die zum Beispiel durch das Eindringen von Fremdmedien in ihrer Funktion beeinträchtigt oder sogar zerstört werden.

Die der Erfindung zugrundeliegende Aufgabe wird dadurch gelöst, daß die Einlegeteile vor der Ummantelung mit Kunststoff an den Stellen, an denen sie von Kunststoff umschlossen werden, mit einem Haftvermittler versehen werden. Dieser Haftvermittler überbrückt die durch das Schwinden des Kunststoffes entstehenden Spalte. Das erfindungsgemäße Verfahren hat den besonderen Vorteil, daß nur die Einlegeteile vorbehandelt werden müssen und am fertigen Bauteil kein zusätzlicher Arbeitsgang mehr erforderlich ist.

Nach einer weiteren Ausgestaltung der Erfindung wird der Haftvermittler in Form einer Lösung aufgetragen. Das hat den Vorteil, daß wirtschaftlich dünne Schichten aufgebracht werden können. Außerdem ist dadurch ein gutes Benetzungsvermögen von kompliziert gestalteten Einlegeteilen gewährleistet.

Als Haftvermittler können im Rahmen der Erfindung zum Beispiel elastische Kunststoffe Verwendung finden. Als elastischer Kunststoff sollen zum Beispiel Schmelzkleber verstanden werden, die beim Umhüllen mit der Umhüllmasse eine Verbindung eingehen und dadurch ebenfalls die Spaltenbildung verhindern.

Als elastischer Kunststoff können aber auch elastomere Dichtungsmassen angewendet werden.

5 Patentansprüche

Patentansprüche

1. Verfahren zur Herstellung von Bauteilen aus Kunststoffen mit Einlegeteilen, d a d u r c h g e k e n n - z e i c h n e t , daß die Einlegeteile vor der Ummantelung mit Kunststoff an den Stellen, an denen sie von Kunststoff umschlossen werden, mit einem Haftvermittler versehen werden.

2. Verfahren nach Anspruch 1, d a d u r c h g e - k e n n z e i c h n e t , daß als Haftvermittler elastische Kunststoffe Verwendung finden.

3. Verfahren nach Anspruch 1, d a d u r c h g e - k e n n z e i c h n e t , daß als elastischer Kunststoff thermoplastische Kunststoffe (Schmelzkleber) angewendet werden.

4. Verfahren nach Anspruch 1, d a d u r c h g e - k e n n z e i c h n e t , daß der Haftvermittler in Form einer Lösung aufgetragen wird.

5. Verfahren nach Anspruch 3, d a d u r c h g e - k e n n z e i c h n e t , daß als elastischer Kunststoff elastische Dichtungsmassen angewendet werden.

0126403

Nummer der Anmeldung

EP 84 10 5462

# EUROPÄISCHER RECHERCHENBERICHT

Europäisches
Patentamt

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | GB-A-1 329 024 (PROFILE EXPANDED PLASTICS) * Seite 1, Zeile 32 - Seite 2, Zeile 67; Patentansprüche * | 1-5 | B 29 C 5/00 |
| | --- | | |
| X | US-A-3 979 549 (R.E. WILKINSON) * Zusammenfassung; Spalte 1, Zeilen 10-45; Spalte 2, Zeile 49 - Spalte 5, Zeile 51; Spalte 6, Zeile 38 - Spalte 8, Zeile 59; Patentansprüche; Figuren 1-7 * | 1-5 | |
| | --- | | |
| A | GB-A- 701 436 (N. HAGEN) * Patentansprüche; Seite 1, Zeilen 41-44; Seite 1, Zeile 85 - Seite 2, Zeile 21 * | 1 | |
| | --- | | RECHERCHIERTE SACHGEBIETE (Int. Cl. ³) |
| A | US-A-4 237 186 (G.E. INGRAHAM) * Zusammenfassung; Spalte 9, Zeile 8 - Spalte 12, Zeile 55; Figuren * | 1,3 | B 05 D 7/00 B 29 F 1/00 B 29 C 6/00 B 29 C 5/00 |
| | --- | | B 29 D 27/00 B 29 C 25/00 |
| A | DE-B-1 225 081 (MOBAY CHEMICAL CY.) * Spalte 1, Zeilen 1-11; Spalte 1, Zeile 30 - Spalte 3, Zeile 56; Patentansprüche * | 1,3 | |
| | ---     -/- | | |

Der vorliegende Recherchenbericht wurde für alle Patentansprüche erstellt.

| Recherchenort DEN HAAG | Abschlußdatum der Recherche 27-08-1984 | Prüfer VANHECKE H. |
|---|---|---|

| | Europäisches Patentamt | **EUROPÄISCHER RECHERCHENBERICHT** | 0126403 Nummer der Anmeldung |
|---|---|---|---|

EP 84 10 5462

| | **EINSCHLÄGIGE DOKUMENTE** | | Seite 2 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
| A | FR-A-1 455 511 (BAKELITE XYLONITE LTD.)<br>* Zusammenfassung; Seite 1, Spalte 1, Absatz 3 - Seite 4, Spalte 2, Absatz 1 *<br><br>--- | 1,3 | |
| A | DE-B-1 604 707 (REHAU PLASTICS)<br>* Patentansprüche *<br><br>----- | 5 | |
| | | | **RECHERCHIERTE SACHGEBIETE (Int. Cl. ³)** |
| | Der vorliegende Recherchenbericht wurde für alle Patentansprüche erstellt. | | |

| Recherchenort<br>DEN HAAG | Abschlußdatum der Recherche<br>27-08-1984 | Prüfer<br>VANHECKE H. |
|---|---|---|